# EUROPEAN PATENT APPLICATION

(11) **EP 4 607 093 A1**
(43) Date of publication of application: **27.08.2025**
(21) Application number: 25159368.7
(22) Date of filing: 21.02.2025
(51) Int. Cl.: F24C 15/04, F24C 15/00, F24C 7/08

(54) **DOOR FOR HOME APPLIANCE**

(30) Priority: 23.02.2024 KR 20240026729
(71) Applicant: LG Electronics Inc., Yeongdeungpo-gu Seoul 07336 (KR)
(72) Inventor: Park, Beom Hyeon, Seoul (KR)
(74) Representative: Vossius & Partner Patentanwälte Rechtsanwälte mbB

(57) **Abstract**

A door for a home appliance and a home appliance including the same are provided. The door for a home appliance includes a door body (70, 80, 90) disposed in front of a storage space (41) of the home appliance. A door panel (G) is coupled to the door body (70, 80, 90). A window (V) is formed in a central portion of the door panel (G). An electronic component unit (100) is disposed at the door panel (G). A frame guide (170) is coupled to the door body (70, 80, 90). At this point, the frame guide (170) is connected to the electronic component unit (100). As described above, the electronic component unit (100) is supported by the frame guide (170) to be able to stably remain fixed to the door (60).

## Description

### CROSS REFERENCE TO RELATED APPLICATION

The present application claims priority to Korean Patent Application No. 10-2024-0026729, filed February 23, 2024, the entire contents of which are incorporated herein for all purposes by this reference.

### BACKGROUND OF THE INVENTION

### Field of the Invention

The present disclosure relates to a door for a home appliance and a home appliance including the same.

### Description of the Related Art

Home appliances storing target objects therein and including doors, such as a cooking appliance, a refrigerator, a clothing treatment apparatus, etc., are widely used. Such home appliances may include storage spaces to store target objects in cabinets creating the external appearance thereof, and doors to open and close the storage spaces.

Recently, various electronic components may be installed inside the doors of the home appliances. For example, the door may be equipped with lights therein to illuminate target objects inside the home appliance. On the other hand, the door may be equipped with cameras to photograph target objects. The electronic components may illuminate or photograph target objects through a window formed in the door.

The electronic components should be placed toward the window of the door, so the electronic components need to be placed close to the window. However, the window of the door is made of a glass material, and it is difficult to fix the electronic components with screws, etc. The electronic components may be fixed around the window with an adhesive, etc., but when the performance of the adhesive decreases, there is a risk that the electronic components may be separated from the door. Specifically, home appliances that generate high heat, such as cooking appliances, create a hot environment for the doors, which can easily weaken the performance of the adhesive.

In addition, when the electronic components are installed at the window of the door with an adhesive, it is difficult to align the electronic components at precise positions because there is no separate fixing component in the window. When the electronic components are not aligned in the precise positions in the window, the electronic components will not be able to precisely illuminate or photograph the internal space of the home appliance.

To solve this problem, the electronic components may be installed in a door frame forming an edge frame of the door. However, when the electronic component is installed in the door frame, the electronic component is placed away from the window provided at the central portion of the door, and it is difficult to secure an installation angle to illuminate or photograph the internal space of the home appliance. Furthermore, separate components should be added to fix the electronic components to the door frame, so the number of parts and the number of man-hours for the assembly may be increased.

### SUMMARY OF THE INVENTION

The present disclosure is provided to solve the above-described problems of the related art, and an objective of the present disclosure is to hold an electronic component disposed at a door of a home appliance to be stably fixed to the door.

Another objective of the present disclosure is to align an electronic component to a precise position in a door.

Yet another objective of the present disclosure is to fix an electronic component to a position of a door, which is closer to a window, without a separate additional component.

Still another objective of the present disclosure is to support an electronic component when components constituting a door are assembled.

According to features of the present disclosure to achieve the above-described objectives, a door for a home appliance of the present disclosure may include a door body disposed in front of a storage space of the home appliance. A door panel may be coupled to the door body. A window may be formed in a central portion of the door panel. An electronic component unit may be disposed at the door panel. A frame guide may be coupled to the door body. At this point, the frame guide may be connected to the electronic component unit. As described above, since the electronic component unit is supported by the frame guide, a fixed state of the electronic component unit to the door may be stably maintained.

In addition, a door handle may be disposed at a position opposite to the frame guide with the door body located between the door handle and the frame guide. A fastener may fasten the frame guide and the door handle to each other.

The frame guide may be disposed between an edge of the door body and the window.

The door body may include a front frame, and a rear frame coupled to the front frame with the door panel located therebetween. At this point, the frame guide may be disposed between the front frame and the rear frame.

The door handle may be disposed at a position opposite to the frame guide with the front frame located between the door handle and the frame guide. The rear frame, the frame guide, the front frame, and the door handle may have respective fastening holes that are connected to each other. A fastener passing through the fastening holes may fasten the rear frame, the frame guide, the front frame, and the door handle to each other.

The door panel may include the window formed at the central portion of the door panel, and a panel edge unit formed around the window. At this point, the electronic component unit and the frame guide may be connected to each other at positions where the electronic component unit and the frame guide face the panel edge unit.

The electronic component unit and the frame guide may be coupled to each other in a direction where the door body and the door panel are stacked to each other.

The electronic component unit may include a connection arm protruding toward an edge of the door body, and the connection arm may be connected to the frame guide.

The connection arm may include a bridge part connected to a casing of the electronic component unit, and a coupling part coupled to the frame guide. At this point, based on a direction where the connection arm is coupled to the frame guide, the coupling part may have a thickness thinner than the bridge part.

The coupling part may be coupled to the support body of the frame guide. The coupling part may be disposed closer to a surface of the front panel than the support body.

The coupling part may be coupled to the support body of the frame guide. The support body may be disposed closer to a surface of the front panel than the coupling part. The support body may include a support protrusion protruding toward a surface of the front panel and passing through a connection hole of the coupling part.

The edge of the door panel and the edge of the door body may be spaced apart from each other to form an installation region. A part of the electronic component unit may be fixed to the installation region.

A part of the frame guide may be fixed to the door body. A remaining part of the frame guide may be disposed at a position facing the surface of the door panel.

The frame guide may include a fixed body fixed to the door body, and a support body connected to the electronic component unit.

The fixed body may extend in a first direction along the edge of the door body. The support body may extend in a second direction from the fixed body toward the window of the door panel. The first direction and the second direction may be formed in different directions.

The fixed body may be disposed at a position farther from the window than the electronic component unit.
the fixed body may include a guide boss protruding in a direction where the front frame and the rear frame are coupled to each other.

A front fastening hole may be formed through the front frame, a rear fastening hole connected to the front fastening hole may be formed through the rear frame, and a guide fastening hole may be formed through the guide boss to connect the front fastening hole and the rear fastening hole to each other while being located between the front fastening hole and the rear fastening hole.

The support body may be spaced apart from the surface of the door panel. The support body may be provided to face the surface of the door panel.

The support body may include a support protrusion protruding toward the surface of the door panel. The electronic component unit may include a connection arm spaced apart from the surface of the door panel. The support protrusion may pass through a connection hole of the connection arm.

An end portion of the support protrusion may be spaced apart from the surface of the door panel.

One of the frame guide and the electronic component unit may include a support protrusion, the other may include a connection hole through which the support protrusion passes.

A plurality of fastener may be coupled to the frame guide. A part of the fasteners may pass through the frame guide and the front frame to be fastened to the door handle. The remaining part of the fasteners may pass through the rear frame, the frame guide, and the front frame to be fastened to the door handle.

The door panel may include a front panel and a rear panel that is spaced apart from the front panel and the front panel to form a space between the front panel and the rear panel. At this point, the frame guide may be connected to the electronic component unit between the front panel and the rear panel.

An opening may be formed through the central portion of the rear frame. A part of the electronic component unit may be exposed through the opening to the storage space.

The electronic component unit may be attached to the door panel. The electronic component unit may be spaced apart from the door body.

The electronic component unit may include a lighting device illuminating the storage space and/or a photographing device that photographs an image of the storage space.

As described above, according to the present disclosure, the door for a home appliance and the home appliance including the same have the following effects.

According to the present disclosure, the electronic component unit provided in the door for a home appliance may be supported by the frame guide of the door. Since the electronic component unit is supported by the frame guide, the fixed state of the electronic component unit to the door can be stably maintained. Accordingly, there is the effect that the durability of the door including the electronic component unit can be improved.

Furthermore, the frame guide may fix the door handle to the door. The frame guide may serve to fix the handle and support the electronic component unit. Accordingly, even without adding a separate part to support the electronic component unit, the mounting stability of the electronic component unit can be improved.

Furthermore, in the present disclosure, the frame guide may be disposed between the frames of the door and coupled the frames together. As described above, the frame guide may assemble the door frame and support the electronic component unit. Accordingly, even without adding a separate part to support the electronic component unit, the mounting stability of the electronic component unit can be improved.

Specifically, in the present disclosure, in the process in which the frames of the door and the door handle are assembled to each other, the frame guide may be naturally connected to a part of the electronic component unit. Since a separate assembly process to support the electronic component unit is not required, the ease of assembly of the door can be improved.

Furthermore, in the present disclosure, the frame guide may be disposed between an edge of the door panel (glass) and an edge of the door frame. When the frame guide connects the edge of the door panel to the edge of the door frame, the electronic component unit may be disposed closer to the window formed at a central portion of the door panel. When the electronic component unit requiring an installation angle toward the window, such as the lighting device or the camera device (image sensing device), is applied, the electronic component unit provided close to the window may secure a wider installation angle.

Furthermore, in the present disclosure, since the frame guide is fixed to the door frame, the frame guide may allow the electronic component unit to be aligned at a precise position in the door. Specifically, the door panel is made of a glass material with a plate form so that it is difficult to provide a structure to set the installation position of the electronic component unit, and the frame guide may precisely set an installation position of the electronic component unit. Therefore, the installation convenience of the electronic component unit can be improved, and the quality of assembly can be improved.

Furthermore, in the present disclosure, the frame guide includes the fixed body extending in the first direction, and the support body extending in the second direction, and the electronic component unit may be supported by the support body. As described above, the frame guide extending respectively in the two different directions may support the electronic component unit at a position that is closer to the central portion of the window. Therefore, the electronic component unit can secure a wider view angle toward the storage space through the window, and the performance of the electronic component unit can be improved.

### BRIEF DESCRIPTION OF THE DRAWINGS

FIG. 1 is a perspective view showing a home appliance according to an embodiment of the present disclosure.
FIG. 2 is a perspective view showing the home appliance without a side cover constituting the embodiment of the present disclosure.
FIG. 3 is a side view projecting and showing a storage space constituting the embodiment of the present disclosure.
FIG. 4 is a perspective view showing the door for a home appliance according to an embodiment of the present disclosure.
FIG. 5 is a perspective view showing the door for a home appliance according to the embodiment of the present disclosure at a view point different from FIG. 4.
FIG. 6 is a front view showing the door for a home appliance according to the embodiment of the present disclosure.
FIG. 7 is an exploded-perspective view showing components constituting the door for a home appliance according to the present disclosure.
FIG. 8 is a rear view showing a rear frame exploded that constitutes the door for a home appliance according to the embodiment of the present disclosure.
FIG. 9 is a perspective view showing the rear frame and an inner frame exploded, the rear frame and an inner frame constituting the door for a home appliance according to the embodiment of the present disclosure.
FIG. 10 is a sectional view taken along line X-X' of FIG. 4.
FIG. 11 is a sectional view enlarging and showing a portion of FIG. 10.
FIG. 12 is a perspective view showing a door handle and a frame guide constituting the door for a home appliance according to the embodiment of the present disclosure, and separated from a door.
FIG. 13 is a perspective view showing the door handle and the frame guide at a view point different from FIG. 12, the door handle and the frame guide constituting the door for a home appliance according to the embodiment of the present disclosure and are separated from the door.
FIG. 14 is an enlarged-perspective view showing an upper portion of FIG. 13.
FIG. 15 is a perspective view showing the frame guide and an electronic component unit, the frame guide and the electronic component unit constituting the door for a home appliance according to the embodiment of the present disclosure, are coupled to the door.
FIG. 16 is a sectional view showing a state in which the door handle and the frame guide, the door handle and the frame guide constituting the door for a home appliance according to the embodiment of the present disclosure, are separated from the door.
FIG. 17 is a sectional view showing a state in which the door handle and the frame guide, the door handle and the frame guide constituting the door for a home appliance according to the embodiment of the present disclosure, are coupled to the door.
FIG. 18 is a perspective view showing a state in which the frame guide and the electronic component unit, the frame guide and the electronic component unit constituting the door for a home appliance according to the embodiment of the present disclosure, are separated.
FIG. 19 is a perspective view showing a state in which the frame guide and the electronic component unit, the frame guide and the electronic component unit constituting the door for a home appliance the embodiment of according to the present disclosure, are coupled with each other.
FIG. 20 is a perspective view showing a state in which the door for a home appliance, the door constituting the door for a home appliance according to the embodiment of the present disclosure, are coupled to each other at a view point different from FIG. 19.
FIG. 21 is a side view showing a state in which the frame guide and the electronic component unit, the frame guide and the electronic component unit constituting the door for a home appliance according to the embodiment of the present disclosure, are coupled to each other.
FIGS. 22 to 25 are views showing an assembly sequence of the door for a home appliance according to the embodiment of the present disclosure.
FIG. 26 is a perspective view showing a state in which the frame guide and the electronic component unit, the frame guide and the electronic component unit constituting the door for a home appliance according to a second embodiment of the present disclosure, are coupled with each other.
FIG. 27 is a perspective view showing a state in which the frame guide and the electronic component unit, the frame guide and the electronic component unit constituting the door for a home appliance according to a third embodiment of the present disclosure, are coupled with each other.
FIG. 28 is a view showing a state in which the frame guide and the electronic component unit, the frame guide and the electronic component unit constituting the door for a home appliance according to a fourth embodiment of the present disclosure, are coupled to each other.
FIG. 29 is a view showing a state in which the frame guide and the electronic component unit, the frame guide and the electronic component unit constituting the door for a home appliance according to a fifth embodiment of the present disclosure, are coupled to each other.
FIG. 30 is a view showing a state in which the frame guide and the electronic component unit, the frame guide and the electronic component unit constituting the door for a home appliance according to a sixth embodiment of the present disclosure, are coupled to each other.
FIG. 31 is a perspective view showing a home appliance according to another embodiment of the present disclosure.

### DETAILED DESCRIPTION OF THE DISCLOSURE

Hereinafter, exemplary embodiments of the present disclosure will be described in detail with reference to the illustrative drawings. Wherever possible, the same reference numerals will be used throughout the drawings and the description to refer to the same or like elements or parts. Furthermore, it is to be noted that, when the detailed description of the functions and configuration of conventional elements related to the present disclosure may make the gist of the present disclosure unclear, a detailed description of those elements will be omitted.

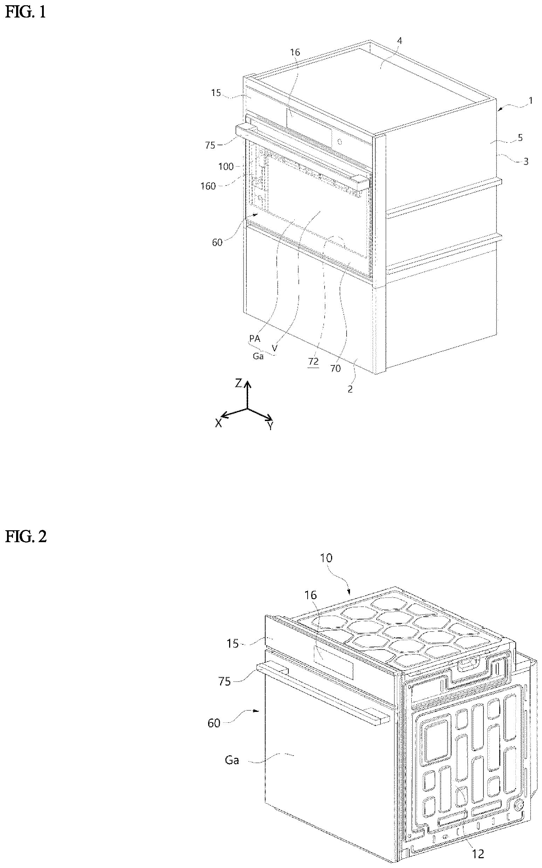

The present disclosure relates to a home appliance, and a door for a home appliance (hereinbelow, which refers to a "door 60"). At this point, the home appliance may be a home appliance in which a storage space 41 is provided. The door 60 may be disposed in front of the storage space 41. At this point, the front means a direction that a user faces when the user is located in front of the home appliance. Referring to FIG. 1, the X-axial direction may be a direction toward the front side. The Y-axial direction may be a left-right width direction of the door 60. The Z-axial direction may be an upper-bottom width direction that is a height direction of the door 60. Hereinbelow, the present disclosure will be described based on the directions.

The door 60 for a home appliance may be applied to the door 60 of a home appliance such as a cooking appliance, a refrigerator, a freezer, a kimchi refrigerator, a plant cultivating apparatus, Styler^{®}, a washing machine, etc., and also be applied to doors of furniture or an entrance door. The present disclosure may be applied to various home appliances equipped with one door 60 or a plurality of doors 60. Various home appliances may include a closed cooking appliance such as an oven, a microwave, etc. Hereinbelow, a door 60 of the present disclosure applied to a cooking appliance will be described as an example.

In the embodiment, electronic component may be disposed inside the door 60. The electronic component may impart various functions to the door 60. For example, when the electronic component is an electronic component unit 100, the electronic component unit 100 may obtain an image inside the storage space 41. The door 60 may increase the inner illuminance of the storage space 41. To this end, the electronic component unit 100 may include an image-sensing device 120 and a lighting device 130.

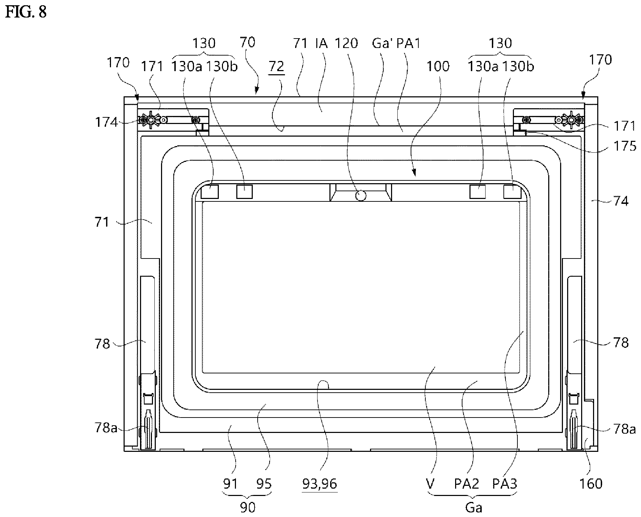

For reference, in FIG. 8, the lighting device 130 is disposed at opposite portions with the image-sensing device 120 located between the opposite lighting devices. The lighting device 130 may include a plurality of lights 130a and 130b. At this point, the plurality of lights 130a and 130b may emit a light in different directions.

As another example, a display device (not shown) may be disposed in the door 60, as an electronic component. The display device may provide information about the home appliance to a user. The user can input an operation order through the display device.

The electronic component unit 100 or a part of the display device may be provided in the door 60. At this point, the electronic component such as the electronic component unit 100, the display device, or the like may transmit or receive an electrical signal with a main control unit provided in a home appliance main body 10 (referring to FIG. 2), or be connected to the main body 10 with a wire for power supply. Hereinbelow, the electronic component unit 100 will be described as an example of the electronic component disposed in the door 60.

For reference, FIG. 1 shows the electronic component unit 100 and a harness guide 160 supplying power to the electronic component unit 100 through a front panel Ga constituting a front surface of the door 60. Practically, the electronic component unit 100 and the harness guide 160 are disposed in the door 60, so the electronic component unit 100 and the harness guide 160 are not exposed from the front space of the door 60.

In the embodiment, the home appliance may be a built-in home appliance. For example, the home appliance may be a cooking appliance installed in a built-in method. In FIG. 1, the cooking appliance of the embodiment may be installed in a kitchen fitting 1, etc., and the front surface of the cooking appliance may be exposed outward. At this point, the front surface of the cooking appliance may include the door 60 and an operating part 15. Reference numeral 16 is a display unit exposed from a front surface of the operating part 15. The electronic component unit 100 described above and the guide device 200 may be disposed in the door 60.

In FIG. 1, the kitchen fitting 1 may include a lower structure 2, a rear surface part 3, an upper surface part 4, and a side surface part 5. The home appliance may be enclosed with the lower structure 2, the rear surface part 3, the upper surface part 4, and the side surface part 5, and may be exposed only at the front surface forward. Since the area where the home appliance is exposed forward is small, the maintenance of the electronic component should be performed in a small space.

FIG. 2 is a view showing only the home appliance without the kitchen fitting 1. When the kitchen fitting 1 is removed, a side cover 12 constituting the main body 10 of the cooking appliance may be exposed. As another example, the home appliance of the present disclosure may not be a built-in home appliance, but be a home appliance exposed at the outside. In this case, outer components constituting a casing 110 of the home appliance, such as the side cover 12, etc., may have different shapes.

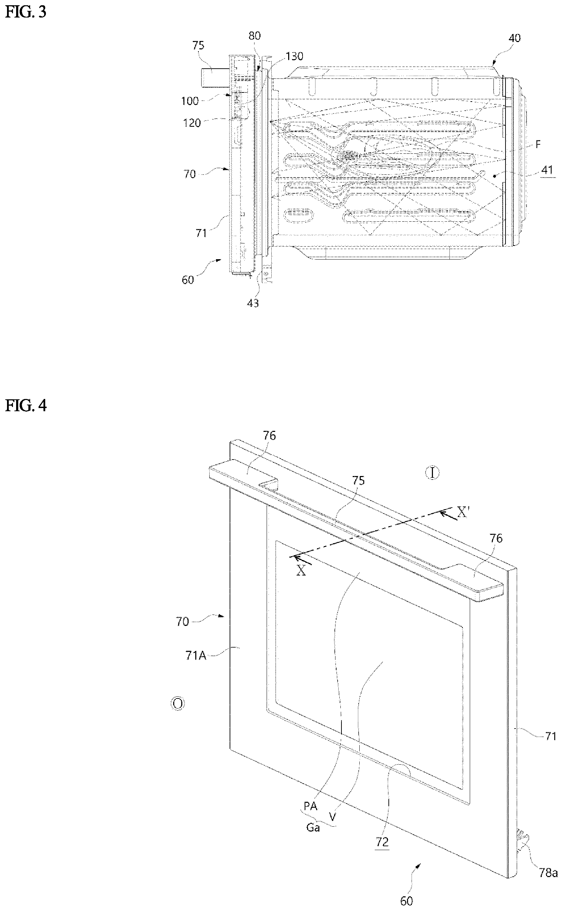

FIG. 3 is a side view showing the embodiment of the present disclosure. For reference, in FIG. 3, the storage space 41 formed in an inner casing 40 of the home appliance is shown in a projected view. The inner casing 40 may be provided in the main body 10. The inner casing 40 may be enclosed with the side cover 12 of the main body 10, etc.

A food F (referring to FIG. 3) may be disposed in the storage space 41. The food F may not be visible from the outside space, i.e., from the front space of the door 60. In the embodiment, since the door 60 includes a window V, the user can observe the inside part of the storage space 41 through the window V. However, when the illuminance of the storage space 41 is low, it is difficult for the user to observe the inside part of the storage space 41 accurately with the naked eye. In the embodiment, since the electronic component includes the lighting device 130, the illuminance of the storage space 41 can be sufficiently increased.

In FIG. 3, dotted lines indicate paths in which the lighting device 130 emits light. As shown in the drawing, the light emitted from the lighting device 130 may be reflected on an inner wall of the storage space 41 to illuminate the storage space 41 evenly. A part of the light emitted from the lighting device 130 may be transmitted to the image-sensing device 120 constituting the electronic component after being reflected on the inner wall of the storage space 41.

At this point, an object outside the door, for example, a feature of the user may also be visible in the storage space 41 through the window V, reflected on the inner wall of the storage space 41, and then transmitted to the image-sensing device. As described above, to prevent the feature of the user from being transmitted to the image-sensing device 120, opaque or translucent printed regions may be set around the window V.

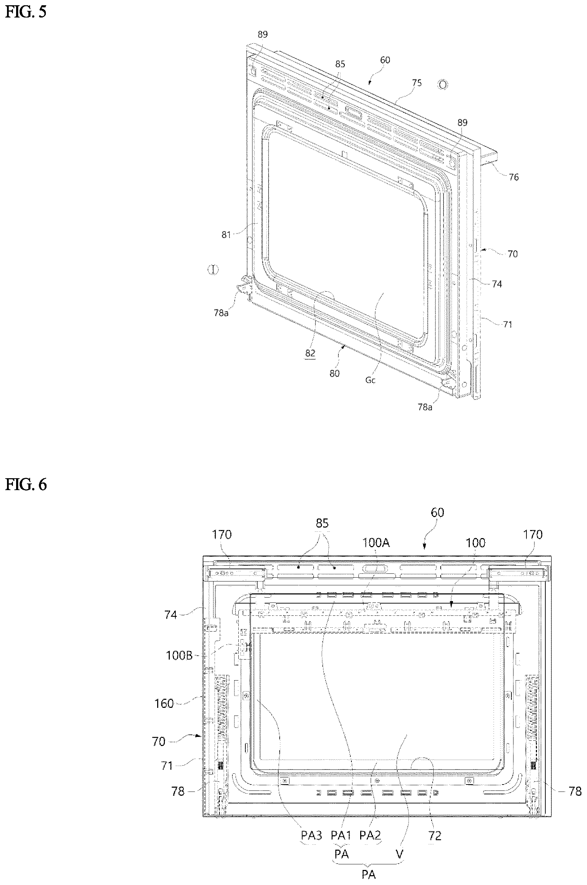

In FIGS. 4 and 5, the door 60 according to the embodiment of the present disclosure is illustrated. For reference, in the drawings, the reference numeral "I" indicates the inside space of the door 60, i.e., a direction toward the storage space 41, and the reference numeral "O" indicates the outside space of the door 60, i.e., the outside space of the home appliance.

The front surface of the door 60 may consist of a front frame 70 to be described below, the front panel Ga, and a door handle 75. The front panel Ga and the door handle 75 may be coupled to the front frame 70. At this point, the front panel Ga may be made of a transparent or translucent material to allow the storage space 41 to be visible. The front panel Ga may be configured such that the entire region thereof is visible forward and rearward or a partial region thereof is visible forward and rearward. In the embodiment, the window V is formed at a central portion of the front panel Ga, and the printed regions may be formed on an outer portion of the window V. The printed region may be a region where the inside space is not visible forward and rearward through the door 60.

The door handle 75 is provided on the front surface of the door 60. The door handle 75 is a portion gripped by the user when the user opens the door 60. In the embodiment, the door 60 may be operated in a kind of pull-down method in which an upper end of the door turns on a lower end vertically. The user can grip and pull the door handle 75 to open the door 60 downward. As another example, the door 60 may be operated in a side-swing method to be opened sideways.

In the embodiment, the door handle 75 may be fixed to the door 60. Specifically, the door handle 75 may be coupled to a door body 70, 80, 90 forming a frame of the door 60. The door handle 75 may also be coupled to a frame guide 170 to assemble the door body 70, 80, 90. At this point, since the frame guide 170 is also connected to the electronic component unit 100, eventually, the door handle 75 may also be indirectly connected to the electronic component unit 100. This structure will be described below.

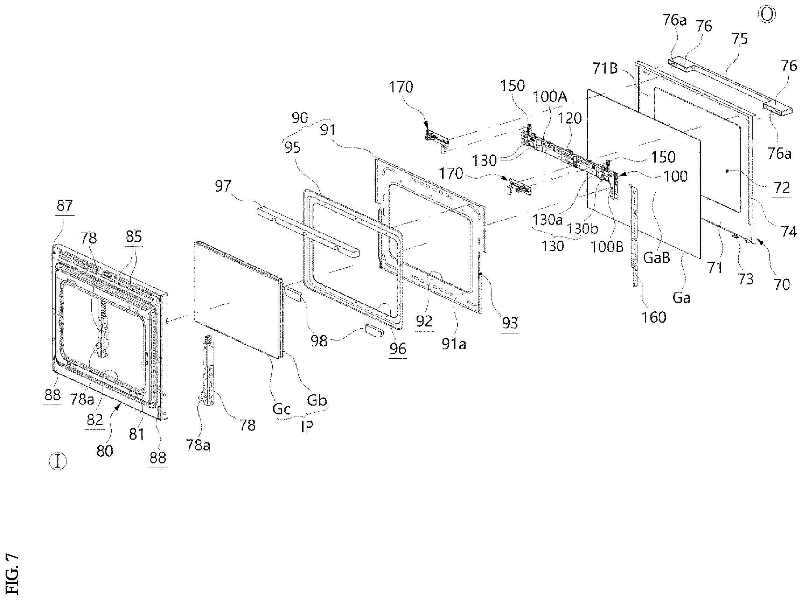

FIG. 5 shows a rear surface of the door 60. As described above, a second rear panel Gc at the central portion and a rear frame 80 surrounding the perimeter of the second rear panel Gc are exposed from the rear surface of the door 60. The second rear panel Gc may consist of a plurality of panels. As shown in FIG. 7, in the embodiment, a rear panel IP includes a first rear panel Gb and the second rear panel Gc, and FIG. 5 shows the second rear panel Gc disposed at the rearmost portion. The reference numeral 85 is a cooling channel formed in the upper portion of the rear frame 80, and external air may flow into the inside space through the cooling channel to cool the home appliance.

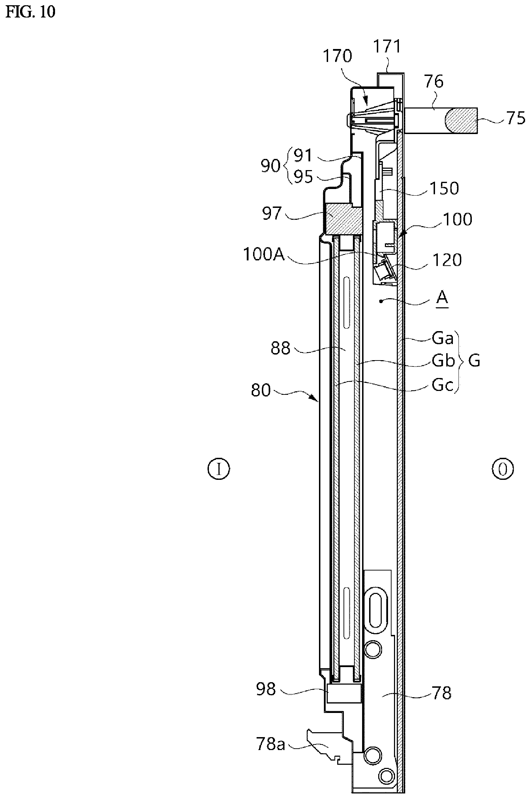

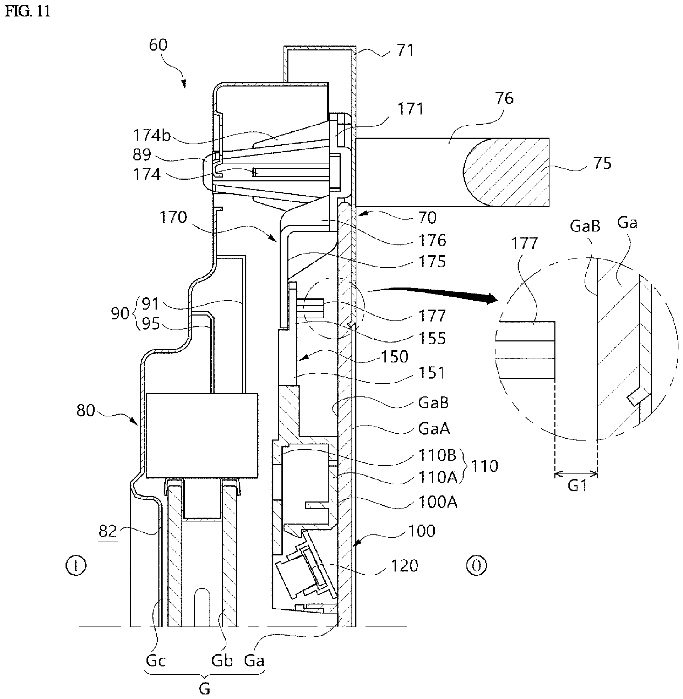

The rear frame 80 may constitute the door body 70, 80, 90 together with the front frame 70 and an inner frame 90 to be described below. The door body 70, 80, 90 may form a frame of the door 60. The door body 70, 80, 90 may serve to surround the edges of a door panel G (referring to FIG. 10). As described below, the rear frame 80 may be fastened to the door handle 75. When the door fastener B2 (referring to FIG. 11) is fastened to the door handle 75 after passing through the rear frame 80, the rear frame 80 is coupled to the door handle 75. At this point, the door fastener B2 also fixes the frame guide 170 to the door body 70, 80, 90 while passing through the frame guide 170. The reference numeral 89 indicates a cover to cover the door fastener B2, and the door fastener B2 may be exposed when the cover 89 is removed.

FIG. 6 is a front view showing the door 60. The window V is formed in a central portion of the door 60. The window V is provided for the storage space 41 to be visible. The window V may be formed in a central portion of the door panel G. More specifically, the door panel G includes a plurality of panels Ga, Gb, and Gc, and the window V may be formed in each central portion of the plurality of panels Ga, Gb, and Gc. The door panel G may be made of a material such as glass that can transmit light.

In the embodiment, among the plurality of panels Ga, Gb, and Gc, the front panel Ga may include a panel edge unit PA surrounding the perimeter of the window V, and the panel edge unit PA prevents the storage space 41 from being visible. In FIG. 6, the panel edge unit PA may include an upper edge part PA1 covering an upper edge of the window V, a lower edge part PA2 covering a lower edge of the window V, and side edge parts PA3 covering opposite edges of the window V. The upper edge part PA1, the lower edge part PA2, and the side edge parts PA3 may be connected to each other and form a rough rectangular shape.

The panel edge unit PA may prevent exposure of the components disposed behind the front panel Ga. For example, the panel edge unit PA may cover the inner frame 90 to be described below, and the electronic component unit 100. In the embodiment, the electronic component unit 100 is disposed behind the upper edge part PA1. FIG. 6 projects and shows the electronic component unit 100 covered by the panel edge unit PA, but practically, the panel edge unit PA covers the electronic component unit 100. The panel edge unit PA covers the components and may improve the aesthetic of the door 60 while being printed in specific colors or shapes.

A front opening 72 may be formed in a central portion of the front frame 70. The front opening 72 may be formed through the central portion of the front frame 70 and expose a part of the front panel Ga. The front opening 72 may expose the window V and a part of the panel edge unit PA.

Referring to FIGS. 7 and 8, parts constituting the embodiment will be described in detail. The door body 70, 80, 90 constituting the frame of the door 60 may include a plurality of frame parts. In the embodiment, the door body 70, 80, 90 may include the front frame 70, the rear frame 80, and the inner frame 90. The frame parts are coupled to each other to form the single door body 70, 80, 90. At this point, the term "front" may be based on the front side of the door 60 (left side based on FIG. 7).

The front frame 70 may be disposed in a front portion of the door body 70, 80, 90. More specifically, the front frame 70 may form a front frame of the door body 70, 80, 90. The front frame 70 includes a front frame body 71 of approximately a rectangular shape. The front opening 72 may be formed through a central portion of the front frame body 71 and expose the door panel G. A front bracket 73 protrudes from a lower end of the front frame body 71, and the front bracket 73 may be coupled to a rear bracket 83 of the rear frame 80 which will be described below. The reference numeral 74 is a side cover, and the harness guide 160 may be stored in the side cover 74.

Among opposite surfaces of the front frame 70, the front panel Ga may be located in close contact with a rear surface 71B of the front frame 70. Since the perimeter of the front frame 70 is wider than the perimeter of the front panel Ga, even when the front panel Ga is provided in close contact with the rear surface 71B of the front frame 70, the rear surface 71B of the front frame 70 may include an installation region IA that is not covered with the front panel Ga. The installation region IA may be formed on a surface of the door body 70, 80, 90 outside the edge of the door panel G. In the embodiment, the installation region IA is formed in the rear surface 71B of the front frame 70 which is outside the edge Ga' of the front panel Ga. As described above, the frame guide 170 may be fixed to the installation region IA formed in the rear surface 71B of the front frame 70. This structure will be described below.

The door handle 75 may be coupled to the front frame 70. The door handle 75 may be coupled to a front surface 71A of the front frame 70. The door handle 75 may be a portion where the user grips when opening and closing the door 60. The door handle 75 may include a handle extension part 76 coupled to the front frame 70. A coupling surface 76a of the handle extension part 76 may be provided in close contact with the front surface 71A of the front frame 70. The handle extension part 76 may be coupled to the rear frame 80, the inner frame 90, and the front frame 70 with the door fastener B2. A structure of the handle extension part 76 will be described again below.

The door body 70, 80, 90 may include a door hinge 78. FIG. 7 shows the door hinge 78 disassembled. FIG. 8 shows the door hinge 78 disposed between the front frame 70 and the inner frame 90. A hinge holding arm 78 may protrude on the door hinge 78. The hinge holding arm 78 may protrude outward of the door body 70, 80, 90 and may be caught and fixed to the main body 10 of the cooking appliance. FIG. 5 shows the hinge holding arm 78 protruding outward of the door 60.

The rear frame 80 may be coupled to the front frame 70 with the door panel G located between the rear frame 80 and the front frame 70. The rear frame 80 may include a rear frame body 81 formed in approximately a rectangular frame. When the door 60 is closed, the rear frame 80 may face an entrance of the storage space 41. A rear opening 82 may be formed in a central portion of the rear frame body 81. The rear opening 82 may have a structure that is open forward and rearward so that the inside part of the storage space 41 is visible through the window V. The reference numeral 88 indicates a holding arm-passing hole through which the hinge holding arm 78 protrudes.

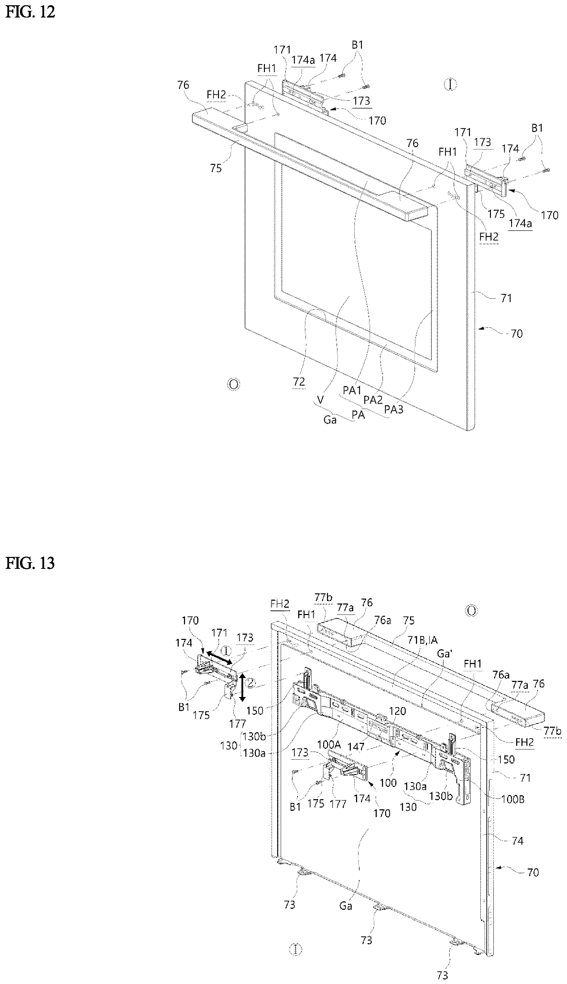

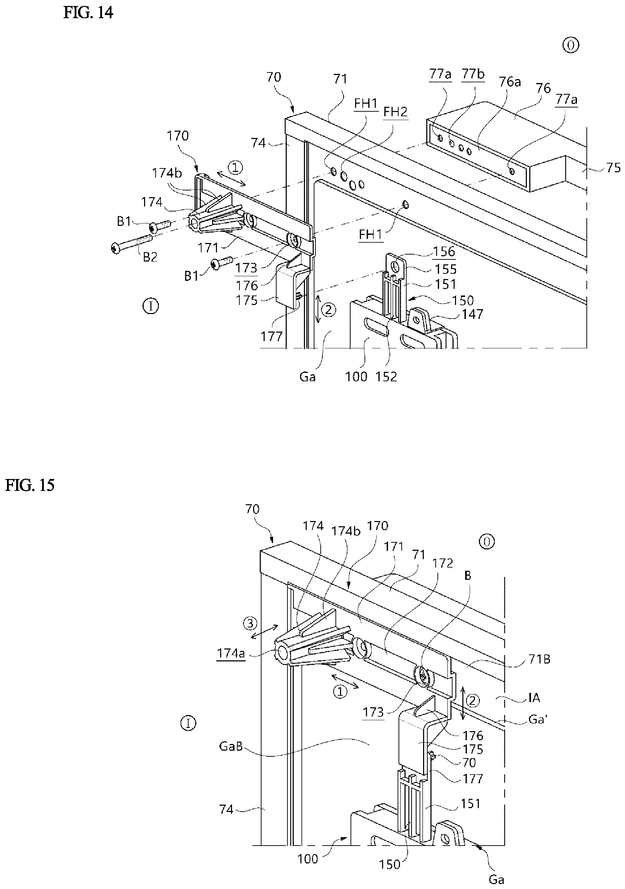

The rear frame 80 may include a rear fastening hole 87. The rear fastening hole 87 may be a portion through which the door fastener B2 passes. After passing through the rear fastening hole 87, the door fastener B2 may pass through a second guide fastening hole 174a of the frame guide 170 (referring to FIG. 14) and a second front fastening hole FH2 of the front frame 70 (referring to FIG. 13), and then assembled to a second handle fastening hole 77b of the door handle 75. Then, the door fastener B2 may assemble the rear frame 80, the front frame 70, the frame guide 170, and the door handle 75 to each other.

The cooling channel 85 may be formed in the rear frame 80. Air flowing into the door 60 through the cooling channel may be transferred to the main body 10 of the cooking appliance and perform a cooling function. On the other hand, heat in the cooking appliance the main body 10 may flow into the cooling channel 85 and then pass inside the door 60 to be discharged to the outside space.

The rear opening 82 of the rear frame 80 does not cover the window V, but may cover a part of the electronic component unit 100. More specifically, as shown in FIG. 8, through the rear opening 82, the image-sensing device 120 and the lighting device 130 that constitute the electronic component unit 100 are exposed in a direction toward the storage space 41 (based on a closed state), but a portion of the electronic component unit 100, which corresponds a portion above the image-sensing device 120 and the lighting device 130, may be covered by the rear frame 80. Accordingly, even when the user opens the door 60, the remaining portion excluding the image-sensing device 120 and the lighting device 130 may not be exposed through the window V.

The inner frame 90 may be coupled to the rear frame 80. The inner frame 90 may be disposed between the rear frame 80 and the front frame 70. The rear panel IP may be disposed between the inner frame 90 and the rear frame 80. An insulator 97, 98 may be disposed between the inner frame 90 and the rear frame 80. When the inner frame 90 is coupled to the rear frame 80, the rear panel IP and the insulator may be fixed.

In the embodiment, the inner frame 90 includes a first inner frame 91 and a second inner frame 95. A first inner opening 92 and a second inner opening 96 may be formed in respective central portions of the first inner frame 91 and the second inner frame 95. The first inner opening 92 and the second inner opening 96 may be connected to the rear opening 82 to expose the window V. A hinge-avoiding part 93 may be formed on each side surface of the first inner frame 91 in a recessed shape. The hinge-avoiding part 93 may have a recessed shape to avoid a portion where the door hinge 78 is mounted. As another example, the inner frame 90 may be omitted or provided as a part of the rear frame 80.

The insulator 97, 98 may be disposed between the inner frame 90 and the rear frame 80. The insulator 97, 98 may be disposed at each of upper and lower ends of the rear panel IP, and perform an insulating function. More specifically, in the embodiment, the rear panel IP may include the first rear panel Gb and the second rear panel Gc, and the first rear panel Gb and the second rear panel Gc are spaced from each other to form an insulating space therebetween. At this point, referring to FIG. 10, the insulator 97, 98 blocks upper ends and lower ends of the first rear panel Gb and the second rear panel Gc, thereby shielding the insulation space.

The first rear panel Gb and the second rear panel Gc constituting the rear panel IP may be spaced apart from the front panel Ga. A gap between the rear panel IP and the front panel Ga spaced as described above may be a flow space A (referring to FIG. 10) where air flows. Furthermore, the rear panel IP may have an insulation space therein to prevent heat in the storage space 41 from being transmitted forward, i.e., toward the door 60. Therefore, the rear panel IP may be considered as an insulation panel. As another example, the rear panel IP may consist of a single panel or of three or more panels.

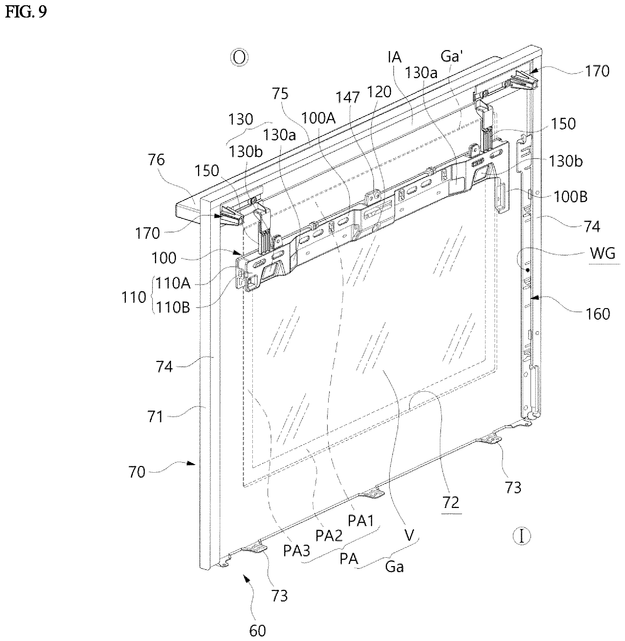

FIG. 9 shows a rear structure of the door 60 without the inner frame 90 and the rear frame 80. As described above, the electronic component unit 100 may be disposed at the front panel Ga. In the embodiment, the electronic component unit 100 may be located in close contact with the front panel Ga. As another example, the electronic component unit 100 may be spaced apart from the front panel Ga.

The electronic component unit 100 may include two casings 110. The image-sensing device 120 and the lighting device 130 may be provided between the two casings 110A and 110B. The image-sensing device 120 may be considered as a kind of camera device to photograph the storage space 41. The lighting device 130 is provided to emit a light into the storage space 41, and may include an LED device. In the embodiment, the electronic component unit 100 includes both the image-sensing device 120 and the lighting device 130. As another example, the electronic component unit 100 may include the image-sensing device 120 or the lighting device 130.

The electronic component unit 100 may include a main unit 100A and a connection unit 100B. The image-sensing device 120 and the lighting device 130 may be disposed in the main unit 100A. A wire harness may be disposed in the connection unit 100B to supply power and transmit signals to the image-sensing device 120 and the lighting device 130. In the embodiment, the main unit 100A and the connection unit 100B may extend in different directions respectively. As another example, the connection unit 100B may be omitted.

The electronic component unit 100 may be disposed at a position that is spaced further toward the window V than the edge Ga' of the front panel Ga. As shown in FIG. 9, the electronic component unit 100 may be located at a position that is spaced from an upper edge of the edge Ga' of the front panel Ga, toward the central portion of the window V. Then, the electronic component unit 100 may be disposed closer to the window V to secure wider view angle and emission angle.

The electronic component unit 100 may be disposed at the panel edge unit PA. The panel edge unit PA may be provided around the perimeter of the window V. The electronic component unit 100 disposed at the panel edge unit PA may be covered by the panel edge unit PA, which prevents the electronic component unit 100 from being exposed forward, i.e., toward the user. In the embodiment, in the panel edge unit PA, the electronic component unit 100 may be disposed at the upper edge part PA1.

The electronic component unit 100 is disposed at a position that is relatively closer to the window V than the edge of the door body 70, 80, 90 so that the electronic component unit 100 and the edge of the door body 70, 80, 90 are spaced apart from each other. Accordingly, the electronic component unit 100 may remain supported and fixed to the door panel G, more specifically, the front panel Ga. For example, the electronic component unit 100 may be fixed to on a surface of the front panel Ga by using an adhesive part such as an adhesive tape.

Furthermore, in the embodiment, the frame guide 170 may maintain a fixed state of the electronic component unit 100. The electronic component unit 100 may be connected to the frame guide 170 and may be fixed to the door body 70, 80, 90 with the frame guide 170 as a medium. A part of the frame guide 170 may be fixed to the door body 70, 80, 90 so that the frame guide 170 may fix the electronic component unit 100 stably.

In the embodiment, the front panel Ga may include the window V formed in the central portion and the panel edge unit PA formed around the window V. At this point, as shown in FIG. 9, the electronic component unit 100 and the frame guide 170 may be connected to each other at positions facing the panel edge unit PA. Therefore, a coupling part between the electronic component unit 100 and the frame guide 170 may be covered by the panel edge unit PA not to be exposed forward (toward the user), and the electronic component unit 100 may be disposed closer to the window V.

More specifically, the frame guide 170 may be fixed to a position close to an upper edge of the front frame 70. At this point, the reference numeral IA indicates, in the surface of the front frame 70, the installation region IA not covered by the front panel Ga. The frame guide 170 may be fixed to the installation region IA. A part of the frame guide 170 may be fixed to the installation region IA, and a remaining part may be disposed at a position facing a surface (rear surface) of the front panel Ga. The remaining part of the frame guide 170, which faces the surface of the front panel Ga, may be connected to the electronic component unit 100 to support the electronic component unit 100.

At this point, the frame guide 170 may be disposed at a position farther from the window V than the electronic component unit 100. Accordingly, the frame guide 170 may be disposed at a gap between an edge of the door body 70, 80, 90 and the electronic component unit 100, thereby connecting the door body 70, 80, 90 and the electronic component unit 100. In FIG. 9, the frame guide 170 is disposed at an upper end of the front frame 70, and the electronic component unit 100 is disposed at an upper end of the window V. As another example, the frame guide 170 and the electronic component unit 100 may be disposed at a side part or a lower part of the front frame 70.

FIG. 9 shows the electronic component unit 100 and the harness guide 160 that supplies power to the electronic component unit 100. A wire storage WG may be provided inside of the harness guide 160 to store the wire harness (not shown). The wire harness supplying power and signals to the electronic component unit 100 may extend along the wire storage WG.

FIG. 10 shows an inner structure of the door 60. The electronic component unit 100 and the frame guide 170 may be disposed between the front panel Ga and the rear panel IP. An upper portion of the frame guide 170 may be disposed between the door handle 75 and the rear panel IP. The upper portion of the frame guide 170 may be coupled to the door handle 75. A lower portion of the frame guide 170 extends toward the central portion of the front panel Ga, i.e., toward the electronic component unit 100 to be connected to the electronic component unit 100. Accordingly, the electronic component unit 100 may be supported to the frame guide 170 and be disposed at a position spaced further toward the central portion of the front panel Ga, and the image-sensing device 120 may secure a wider view angle.

FIG. 11 is an enlarged view showing a structure of the frame guide 170 and the electronic component unit 100. As shown in the drawing, a fixed body 171 constituting the frame guide 170 is disposed at an outer portion of the door 60. Based on the drawing, the fixed body 171 may be disposed at an upper end of the door 60 and disposed between the door handle 75 and the rear frame 80. A support body 175 connected from the fixed body 171 may extend toward the electronic component unit 100 and may be coupled to a connection arm 150 of the electronic component unit 100. More specifically, the support body 175 includes a support protrusion 177 protruding toward a surface of the front panel Ga, and the support protrusion 177 may pass through a connection hole 156 of the coupling part 155 to support the electronic component unit 100.

In the embodiment, the electronic component unit 100 and the frame guide 170 may be coupled to each other in a direction where the door body 70, 80, 90 and the door panel G are stacked on each other. Based on FIG. 11, the front frame 70 constituting the door body 70, 80, 90 and the front panel Ga constituting the door panel G may be stacked in a left-right direction. The support protrusion 177 of the frame guide 170 may be coupled to the coupling part 155 of the electronic component unit 100 in the left-right direction. As described above, during a process of assembling the components constituting the door 60, the frame guide 170 and the electronic component unit 100 may be assembled to each other naturally.

As shown in the enlarged portion in FIG. 11, one end portion of the support protrusion 177 is spaced apart from the surface of the door panel G at a predetermined distance G1. At this point, the door panel G may be the front panel Ga. When the support protrusion 177 is spaced apart from the surface GaB of the front panel Ga, it is possible to secure an available space where the entire frame guide 170 including the support protrusion 177 is rotatable. More specifically, based on FIG. 11, the frame guide 170 may be rotated clockwise to be separated from the electronic component unit 100, while the frame guide 170 is rotated counterclockwise to be coupled to the electronic component unit 100.

The electronic component unit 100 includes the connection arm 150 protruding toward an edge of the door body 70, 80, 90. The connection arm 150 may be connected to the frame guide 170. Based on FIG. 11, the connection arm 150 extends upward toward the upper edge of the door body 70, 80, 90. The frame guide 170 includes the support body 175 extending toward the connection arm 150 of the electronic component unit 100. A surface of the connection arm 150 and a surface of the support body 175 may be disposed to face each other.

The support body 175 may be spaced apart from the surface of the door panel G. The support body 175 may be provided to face the surface of the door panel G. In FIG. 11, the surface of the support body 175 faces the rear surface GaB of the front panel Ga of the door panel G, and is spaced apart from the rear surface GaB of the front panel Ga at a predetermined distance. Accordingly, a coupling distance to allow the support protrusion 177 to be inserted into the connection hole 156 of the connection arm 150 may be formed. For reference, a front surface GaA of the front panel Ga may be a surface that is exposed toward the front space of the cooking appliance, i.e., toward the user when the door 60 is closed.

FIGS. 12 and 13 are views showing the door handle 75 and the frame guide 170 separated from the door 60. As shown in the drawings, the door handle 75 and the frame guide 170 may be coupled to each other with the door body 70, 80, 90 located therebetween. At this point, the door body 70, 80, 90 may mean the front frame 70. A guide fastener B1 shown in FIG. 12 may pass through the frame guide 170 and the front frame 70 to be fastened to the door handle 75. Unlike the door fastener B2 described above, the guide fastener B1 may not pass through the rear frame 80.

More specifically, the guide fastener B1 may pass through a first fastening hole 173 of the frame guide 170, pass through a first front fastening hole FH1 of the front frame 70, and be assembled to a first handle fastening hole 77a of the door handle 75. Accordingly, the guide fastener B1 may fix the door handle 75 to the front frame 70, and simultaneously fix the frame guide 170 to the front frame 70. Then, the electronic component unit 100 may be fixed to the front frame 70 by the frame guide 170 as a medium.

As shown in FIGS. 13 and 14, the frame guide 170 may include the fixed body 171 fixed to the door body 70, 80, 90, and the support body 175 connected to the fixed body 171 and the electronic component unit 100. The fixed body 171 is fixed to the front frame 70 of the door body 70, 80, 90. The support body 175 may be fixed to the front frame 70 through the fixed body 171. In the embodiment, the fixed body 171 and the support body 175 may be integrally provided. As another example, the fixed body 171 and the support body 175 may be separately provided. As another example, the support body 175 may be omitted, the connection arm 150 may be directly coupled to the fixed body 171 instead of the support body 175.

The fixed body 171 may extend in a first direction along the edge of the door body 70, 80, 90. In the embodiment, the fixed body 171 extends in the first direction along the edge of the front frame 70. At this point, the first direction may be a left-right width direction of the door 60. The support body 175 may extend in a second direction from the fixed body 171 to the window V of the door panel G. At this point, the direction toward the window V of the door panel G may be a direction toward the central portion of the front panel Ga. In other words, the first direction and the second direction are formed in different directions.

In FIG. 15, the guide boss 174 may protrude on the fixed body 171. The guide boss 174 may protrude from the surface of the fixed body 171 in a direction where the front frame 70 and the rear frame 80 are coupled to each other. The direction where the front frame 70 and the rear frame 80 are coupled to each other is a front-rear direction of the door 60, and is different from the first direction and the second direction. The structure of the guide boss 174 will be described below again.

The frame guide 170 may be fixed to the installation region IA. As described above, the installation region IA is formed between the edge Ga' of the front panel Ga and the edge of the front frame 70. In other words, the installation region IA may be formed in a remaining portion where the surface of the front panel Ga does not cover the rear surface 71B of the front frame 70. In the embodiment, the installation region IA is formed in the rear surface 71B of the front frame 70 which is outside the edge Ga' of the front panel Ga. The region is a portion outside the front panel Ga, and the fastener may be fastened to the portion.

More specifically, a part of the surface of the fixed body 171 of the frame guide 170 may be located in close contact with the installation region IA. As will be described below, the fixed body 171 includes a close contact portion 172, and a surface of the close contact portion 172 is located in close contact with the installation region IA. The close contact portion 172 may protrude toward the installation region IA. A portion of the fixed body 171 excluding the close contact portion 172 is not provided in close contact with the installation region IA, and may be spaced apart from the surface of the installation region IA. As described above, the fixed body 171 spaced apart from the surface of the installation region IA forms a kind of stepped structure with the close contact portion 172, thereby avoiding interference between the edge Ga' of the front panel Ga.

The second guide fastening hole 174a and the first fastening hole 173 to which the door fastener B2 and the guide fastener B1 are fastened may be formed in the close contact portion 172. Accordingly, when the door fastener B2 and the guide fastener B1 are fastened, the close contact portion 172 of the frame guide 170 may be brought into contact with the installation region IA of the front frame 70 strongly.

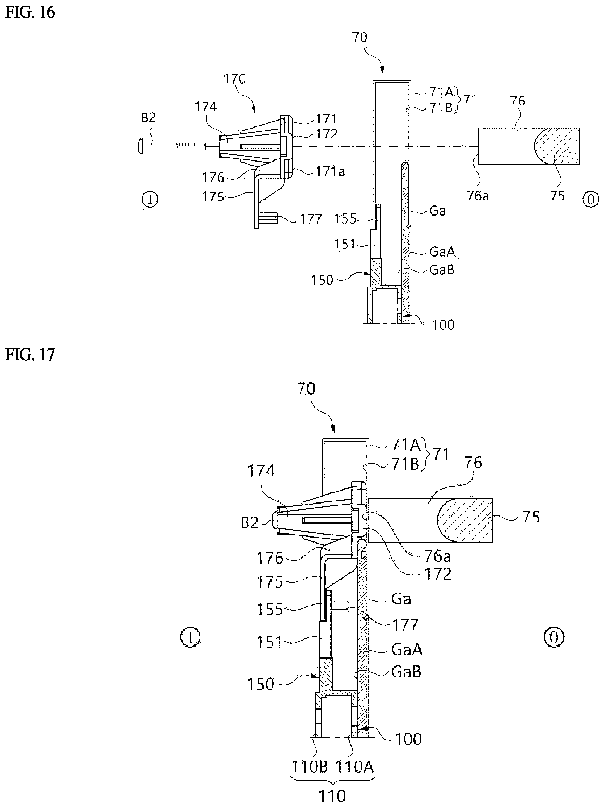

FIGS. 16 and 17 are views showing the door handle 75 and the frame guide 170 disposed with the front frame 70 of the door body 70, 80, 90 located between the door handle 75 and the frame guide 170. As shown in the exploded view of FIG. 16, the coupling surface 76a formed in the handle extension part 76 of the door handle 75 faces the front surface 71A of the front frame 70, and the fixed body 171 of the frame guide 170 faces the rear surface 71B of the front frame 70. In this state, when the guide fastener B1 passes through each of the fixed body 171 and the front frame 70 to be fastened to the handle extension part 76.

The support protrusion 177 provided on the support body 175 of the frame guide 170 faces the rear surface GaB of the front panel Ga, and the support protrusion 177 passes through the connection arm 150 in a process when the frame guide 170 is brought into close contact with the front frame 70. In other words, a direction where the support protrusion 177 passes through the connection hole 156 of the connection arm 150 is equal to a direction where the frame guide 170 is coupled to the front frame 70. Accordingly, in the assembly process of the frame guide 170, the frame guide 170 and the electronic component unit 100 may be coupled to each other naturally.

In FIG. 17, the close contact portion 172 of the frame guide 170 is brought into close contact with the rear surface 71B of the front frame 70, and the support body 175 and the connection arm 150 are spaced apart from the rear surface GaB of the front panel Ga while being coupled to each other. At this point, the support protrusion 177 is spaced apart from the rear surface GaB of the front panel Ga at a predetermined distance, which prevents the support protrusion 177 from colliding with the front panel Ga in the assembly process of the frame guide 170. Furthermore, as described above, when the frame guide 170 is rotated to be removed, it is possible to prevent interference between the support protrusion 177 and the front panel Ga.

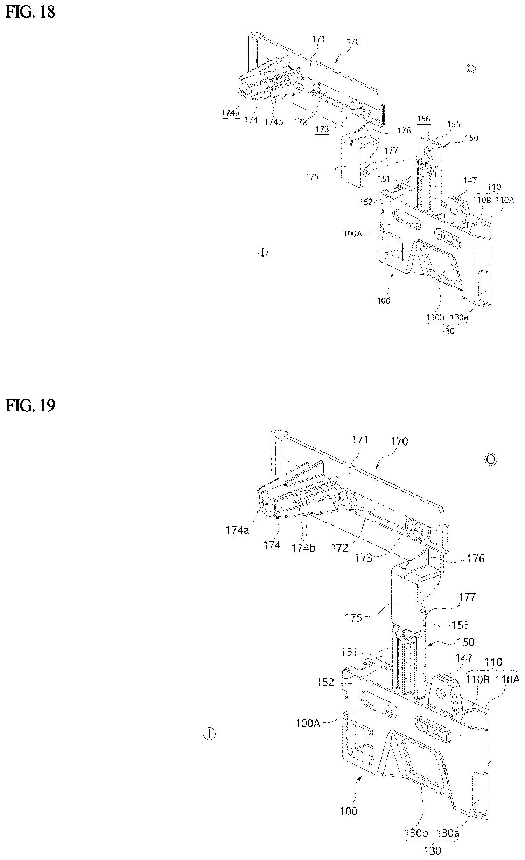

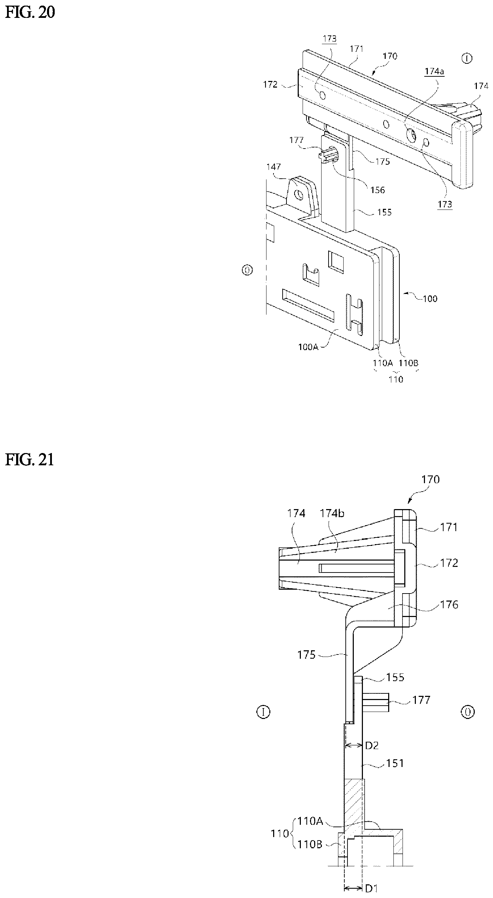

A structure of the coupling part 155 between the frame guide 170 and the electronic component unit 100 will be described in detail with reference to FIGS. 18 and 20. First, in describing the electronic component unit 100, the electronic component unit 100 includes the connection arm 150. The connection arm 150 may be provided at one casing 110 of the pair of casings 110 constituting the electronic component unit 100. As another example, the casing 110 may be one component. As another example, each of the pair of casings 110 may include the connection arm 150. For reference, the reference numeral 147 indicates an assembly piece to assemble the pair of casings 110. The assembly piece 147 may be omitted.

The connection arm 150 may include a bridge part 151 connected to the casing 110 of the electronic component unit 100. The bridge part 151 may be considered as a portion provided integrally with the casing 110. The bridge part 151 may have a plate structure extending in one direction. In the embodiment, ribs 152 are provided on a surface of the bridge part 151. The ribs 152 provide an uneven structure to the bridge part 151 to reinforce the strength of the bridge part 151.

The coupling part 155 is coupled to one end portion of the bridge part 151. The coupling part 155 is a portion coupled to the frame guide 170. The connection hole 156 is open in the coupling part 155. The connection hole 156 is a portion through which the support protrusion 177 passes, and is open in a direction where the electronic component unit 100 is brought into close contact with the front panel Ga.

The coupling part 155 may have a thickness thinner than the bridge part 151. At this point, the thickness is based on a direction where the connection arm 150 is coupled to the frame guide 170 (referring to the direction of arrow 3 in FIG. 15). Then, the bridge part 151 and the coupling part 155 may have a kind of step therebetween. The step may be filled with the support body 175 of the frame guide 170. Referring to FIG. 11, the sum of the thickness of the support body 175 and the thickness of the coupling part 155 may be less than or equal to the thickness of the bridge part 151. Accordingly, the structure may prevent the thickness of the frame guide 170 and the coupling part 155 of the electronic component unit 100 from increasing.

As shown in FIG. 18, the frame guide 170 includes the fixed body 171 fixed to the door body 70, 80, 90. The fixed body 171 has approximately a plate structure. The fixed body 171 may be fixed to the installation region IA (referring to FIG. 15). A part of the fixed body may be fixed to the installation region IA, and the remaining part may be outside the installation region IA and face the front panel Ga.

The close contact portion 172 may protrude from the fixed body 171. The close contact portion 172 may protrude from the fixed body 171 toward the installation region IA. In other words, the close contact portion 172 may be considered to be recessed from the fixed body 171. The close contact portion 172 may extend from a center portion of the fixed body 171 in the first direction (referring to the direction of arrow ① FIG. 15). The step formed by the close contact portion 172 may prevent the fixed body 171 from interfering with the edge Ga' that is the upper end of the front panel Ga.

The close contact portion 172 may include a plurality of guide fastening holes 173 and 174a. The guide fastening holes 173 and 174a includes the first fastening hole 173 and the second guide fastening hole 174a. The second guide fastening hole 174a may be formed through the guide boss 174. The second guide fastening hole 174a may allow the door fastener B2 to fasten the rear frame 80, the frame guide 170, the front frame 70, and the door handle 75 to each other. The first fastening hole 173 may allow the guide fastener B1 to fasten the frame guide 170, the front frame 70, and the door handle 75 to each other. In the embodiment, a pair of first fastening holes 173 is provided. As another example, the second guide fastening hole 174a or the first fastening hole 173 may be omitted.

In FIG. 20, the second guide fastening hole 174a may be formed between the pair of the pair of fastening holes 173. The guide fastener B1 passing through the first fastening hole 173 may assemble the frame guide 170, the front frame 70, and the door handle 75 to each other, but the door fastener B2 passing through the second guide fastening hole 174a may assemble the entire door body 70, 80, 90.

The fixed body 171 includes the guide boss 174. The guide boss 174 may protrude from the surface of the fixed body 171 in a direction where the front frame 70 and the rear frame 80 are spaced from each other. One end portion of the guide boss 174 may be located into close contact with the surface of the rear frame 80. FIG. 11 shows the end portion of the guide boss 174 in close contact with the surface of the rear frame 80. The guide boss 174 may guide the door fastener B2 when the door fastener B2 is fastened. The door fastener B2 may extend to the door handle 75 through the guide boss 174. The reference numeral 174b indicates boss ribs to reinforce the strength of the guide boss 174.

The support body 175 may be connected to the fixed body 171. The support body 175 may extend in a direction from the fixed body 171 toward the window V (downward direction based on FIG. 18). The support body 175 may extend toward the electronic component unit 100. The support body 175 is a portion connected to the connection arm 150 of the electronic component unit 100. The reference numeral 176 indicates a reinforcing plate connecting the fixed body 171 and the support body 175 to each other.

The support body 175 has approximately a '¬ '-shaped sectional form and may be spaced apart from the front panel Ga. As described above, the support protrusion 177 may protrude from the support body 175 spaced apart from the front panel Ga. The support protrusion 177 may protrude in a direction toward the surface of the front panel Ga and a direction toward the connection arm 150. The support protrusion 177 may pass through the connection hole 156 of the connection arm 150. When the support protrusion 177 passes through the connection hole 156, the load of the electronic component unit 100 is transmitted to the support protrusion 177, and the frame guide 170 may support the electronic component unit 100.

As shown in FIG. 20, the support protrusion 177 may further protrude after passing through the connection hole 156. Accordingly, the support protrusion 177 may stably lock the connection hole 156. In the embodiment, the support protrusion 177 has approximately a "+" shaped cross-sectional shape. As another example, the support protrusion 177 may have a cylindrical shape or a polygonal columnar shape.

As shown in FIG. 21, the coupling part 155 may have a thickness thinner than the bridge part 151. At this point, the thickness is based on a direction where the connection arm 150 is coupled to the frame guide 170 (a left-right direction in FIG. 21). Then, the bridge part 151 and the coupling part 155 may have a kind of step therebetween. The step may be filled with the support body 175 of the frame guide 170. The sum D2 of the thickness of the support body 175 and the thickness of the coupling part 155 may be formed less than or equal to the thickness D1 of the bridge part 151.

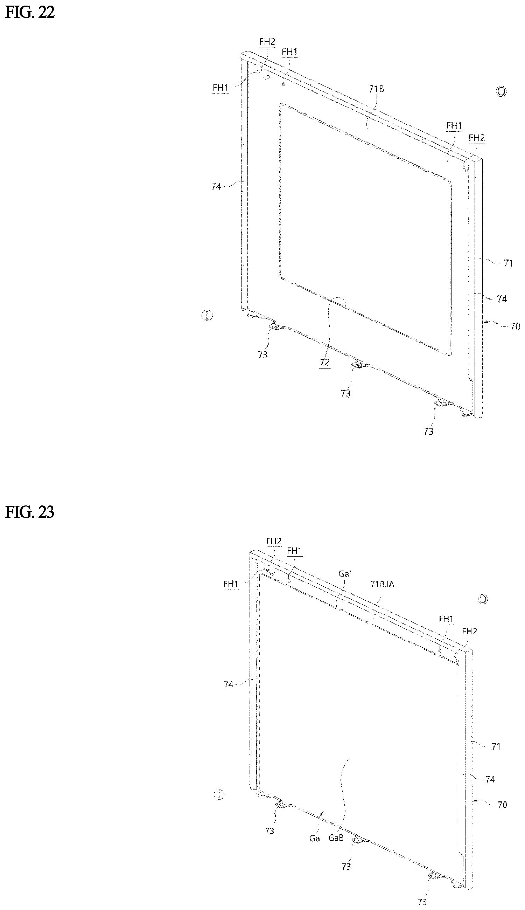

FIGS. 22 to 25 show a process of assembling the door 60 according to the embodiment. First, the front opening 72 may be open in a central portion of the front frame 70 shown in FIG. 22. The front panel Ga is coupled to the front frame 70 while covering the front opening 72. FIG. 23 shows the front panel Ga that is brought into close contact with the front frame 70. The front panel Ga may be temporarily fixed to the front frame 70 with adhesive tape.

When the front panel Ga is coupled to the front frame 70, the front opening 72 is covered by the front panel Ga, but the front fastening holes FH1 and FH2 of the front frame 70 are not covered by the front panel Ga. In FIG. 23, the front fastening holes FH1 and FH2 are exposed outside the upper edge Ga' of the front panel Ga. More specifically, the installation region IA is formed between the upper edge Ga' of the front panel Ga and the edge of the front frame 70, and the front fastening holes FH1 and FH2 provided in the installation region IA may remain exposed.

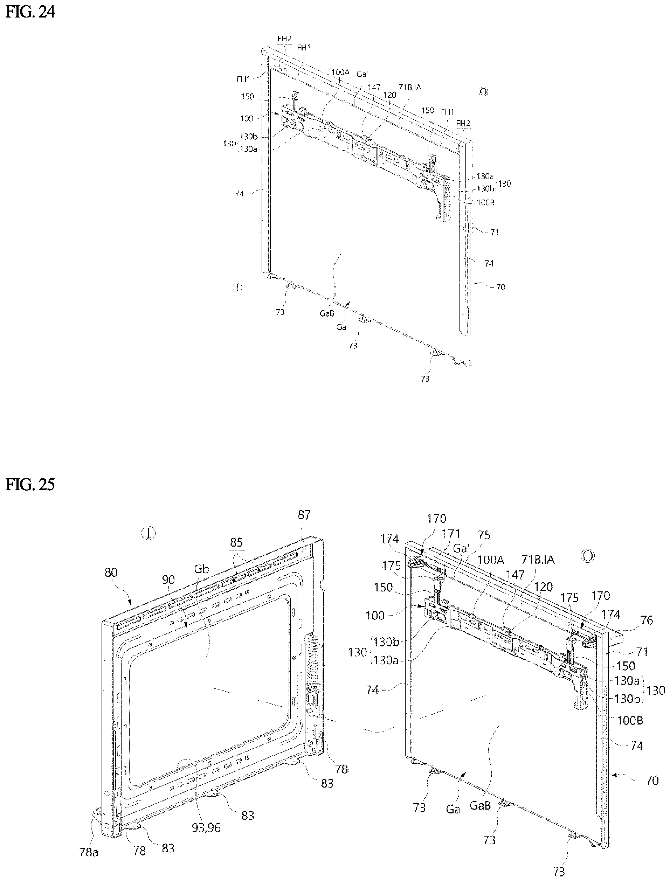

In this state, as shown in FIG. 24, the electronic component unit 100 may be coupled to the front panel Ga. The electronic component unit 100 may be bonded to the rear surface GaB of the front panel Ga to be temporarily fixed. The electronic component unit 100 is spaced apart from the installation region IA and may be disposed close to the central portion of the front panel Ga. Since the electronic component unit 100 is supported only by the front panel Ga to be fixed, it is possible to correct the fixed state of the electronic component unit 100.

FIG. 25 shows the frame guide 170 fixed to the installation region IA. When the frame guide 170 is fixed to the installation region IA, the support protrusion 177 of the frame guide 170 passes through the connection hole 156 of the electronic component unit 100, and the frame guide 170 supports the electronic component unit 100. Accordingly, the gravitational force exerted on the electronic component unit 100 may prevent the electronic component unit 100 from being removed from the front panel Ga. As described above, in the process of assembling the door handle 75 to the front frame 70, the frame guide 170 may be naturally connected to a part of the electronic component unit 100. Therefore, it is not necessary for a separate assembly process to support the electronic component unit 100.

First, the frame guide 170 may be assembled to the installation region IA with the guide fastener B1. After the guide fastener B1 passes through the first fastening hole 173 of the frame guide 170, the guide fastener B1 may pass through the first front fastening hole FH1 of the front frame 70 to be fastened to the first handle fastening hole 77a of the door handle 75. Then, with the front frame 70 located between the frame guide 170 and the door handle 75, the frame guide 170 may be assembled to the door handle 75, and both the door handle 75 and the frame guide 170 may be fixed to the front frame 70. As described above, the frame guide 170 may support the electronic component unit 100 while fixing the door handle 75. Accordingly, the mounting stability of the electronic component unit 100 can be increased without adding a separate part to support the electronic component unit 100.

In this state, the rear frame 80 may be assembled to the front frame 70. As shown in FIG. 25, the rear frame 80 is assembled to the inner frame 90. After the rear frame 80 is coupled to the front frame 70, the rear frame 80 and the front frame 70 are assembled to each other through the first fastening hole. More specifically, the door fastener B2 performs assembly while passing through the rear fastening hole 87 of the rear frame 80, the second guide fastening hole 174a of the frame guide 170, the second front fastening hole FH2 of the front frame 70, and the second handle fastening hole 77b of the door handle 75. Accordingly, not only the front frame 70 and the rear frame 80, but also the frame guide 170 located between the front frame 70 and the rear frame 80 and the door handle 75 may be re-secured.

At the same time, a lower portion of the door body 70, 80, 90 may be assembled by the front bracket 73 of the front frame 70 and the rear bracket 83 of the rear frame 80. With the front bracket 73 and the rear bracket 83 overlapping with each other, a separate lower fastener (not shown) assemblies the front bracket 73 and the rear bracket 83 to each other.

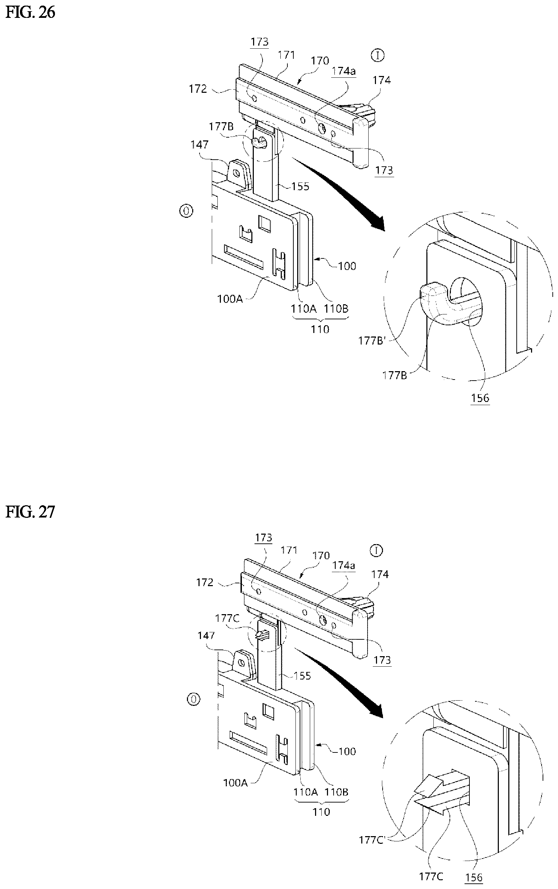

FIG. 26 shows a coupling part between the electronic component unit 100 and the frame guide 170 constituting a second embodiment of the door 60 according to the present disclosure. The description of the structure equal to the above-described embodiment will be omitted. As shown in the drawing, a support protrusion 177B of the frame guide 170 may pass through the connection arm 150 of the electronic component unit 100. A hook part 177B' may be provided at one end portion of the support protrusion 177B. The hook part 177B' extends in a direction different from the direction where the support protrusion 177B protrudes on the frame guide 170. The hook part 177B' may prevent the support protrusion 177B from being separated from the connection hole 156.

In the embodiment, when the hook part 177B' is inserted into the connection hole 156, the entire frame guide 170 may be rotated. In order to insert the hook part 177B' into the connection hole 156, the frame guide 170 is coupled to the connection arm 150 while being rotated. On the other hand, when the frame guide 170 is separated from the connection arm 150, the frame guide 170 may be rotated in the opposite direction.

FIG. 27 shows a coupling part between the electronic component unit 100 and the frame guide 170 constituting a third embodiment of the door 60 according to the present disclosure. The description of the structure equal to the above-described embodiment will be omitted. As shown in the drawing, a support protrusion 177C of the frame guide 170 may include two fingers 177C'. Each of the fingers 177C' may be a cantilever structure. The two fingers 177C' pass through the connection hole 156 while being elastically deformed in a direction that brings the two fingers closer to each other, and then are restored to the original form to be caught by the connection hole 156. To this end, the width of one end portion of each finger 177C' may become wider.

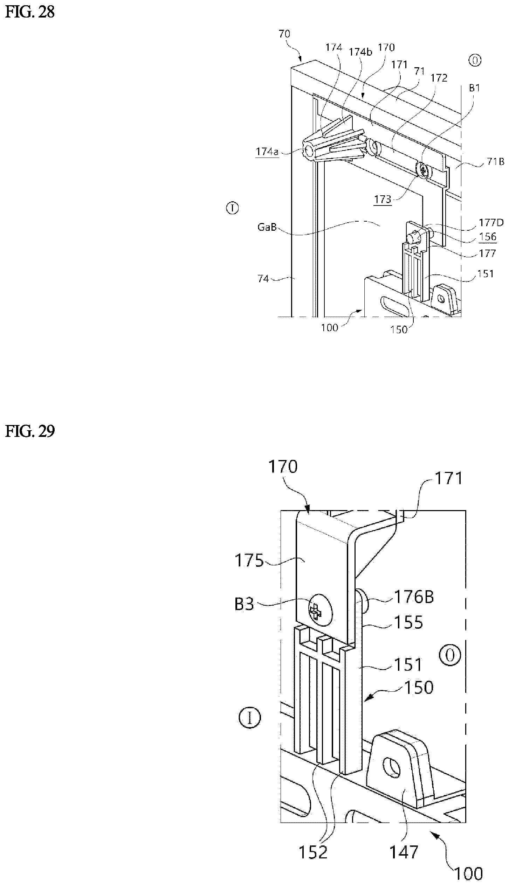

FIG. 28 shows a coupling part between the electronic component unit 100 and the frame guide 170 constituting a fourth embodiment of the door 60 according to the present disclosure. The description of the structure equal to the above-described embodiment will be omitted. As shown in the drawing, the support protrusion 177D of the frame guide 170 may protrude in a direction that is moved away from the front panel Ga, i.e., in a direction toward the rear panel IP. In the embodiment, the frame guide 170 may be assembled to the front frame 70 before the electronic component unit 100, and the electronic component unit 100 may be coupled to the frame guide 170 to be brought into contact with the front panel Ga.

As another method, after the electronic component unit 100 is first attached to the front panel Ga, and then the frame guide 170 may be connected to the electronic component unit 100 to be coupled to the front frame 70. To this end, the frame guide 170 may be rotated to be coupled to the electronic component unit 100. More specifically, with the support protrusion 177D of the frame guide 170 inserted into a gap between the connection arm 150 and the rear surface GaB of the front panel Ga, the support protrusion 177D may be rotated to pass through the connection hole 156.

FIG. 29 shows a coupling part between the electronic component unit 100 and the frame guide 170 constituting a fifth embodiment of the door 60 according to the present disclosure. The description of the structure equal to the above-described embodiment will be omitted. As shown in the drawing, the frame guide 170 and the electronic component unit 100 may be assembled together by a connecting fastener B3. With the support body 175 of the frame guide 170 and the connection arm 150 of the electronic component unit 100 stacked on each other, and then the fastener may pass through the support body 175 and the connection arm 150 of the electronic component unit 100.

To this end, the support body 175 and the connection arm 150 have holes through which the connecting fastener B3 passes. The reference numeral 176B is an assembly boss part provided at the connection arm 150 to assemble the connecting fastener B3. The assembly boss part protrudes toward the front panel Ga. In the embodiment, the connection arm 150 may be disposed closer to the front panel Ga than the support body 175.

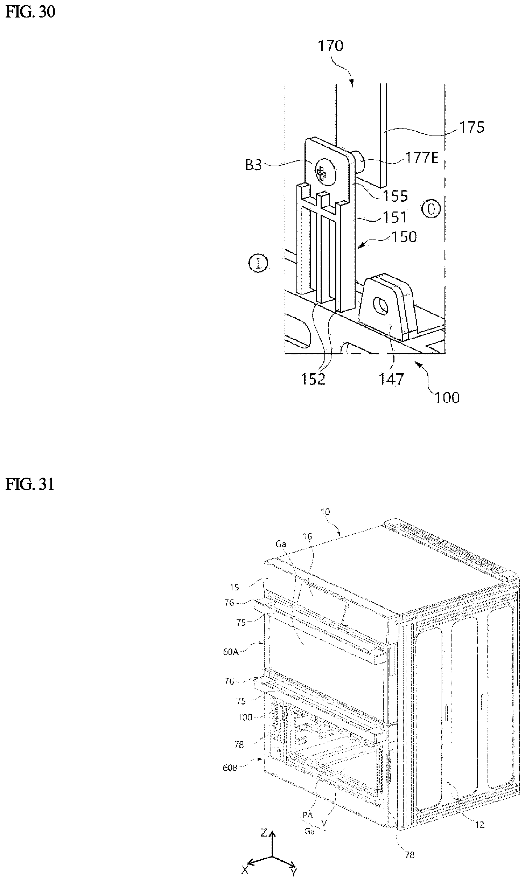

FIG. 30 shows a coupling part between the electronic component unit 100 and the frame guide 170 constituting a sixth embodiment of the door 60 according to the present disclosure. The description of the structure equal to the above-described embodiment will be omitted. As shown in the drawing, the frame guide 170 and the electronic component unit 100 may be assembled together by a connecting fastener B3. With the support body 175 of the frame guide 170 and the connection arm 150 of the electronic component unit 100 stacked on each other, and then the fastener may pass through the support body 175 and the connection arm 150 of the electronic component unit 100. A difference between the fifth embodiment and the sixth embodiment is that the support body 175 of the frame guide 170 is disposed closer to the front panel than the connection arm 150 of the electronic component unit 100.

The support body 175 and the connection arm 150 have holes through which the connecting fastener B3 passes. The reference numeral 177E indicates an assembly boss part protruding from the support body 175 toward the connection arm 150 to assemble the connecting fastener B3. the assembly boss part 177E is aligned to the connection hole of the connection arm 150 (hidden in the drawing), and then the connecting fastener B3 may pass through the connection hole 156 to be assembled to the assembly boss part.

FIG. 31 shows another embodiment of a home appliance according to the present disclosure. As shown in the drawing, the home appliance may include two doors 60A and 60B. At this point, in the above-described embodiment, both the electronic component unit 100 and the frame guide 170 may be installed in the upper door 60A or the lower door 60B, or in both the doors 60A and 60B.

Although not shown in the drawing, as another embodiment, the door handle 75 may be omitted in the door 60. As another example, the door handle 75 may be included as a part of the front frame 70. For example, a part of the front frame 70 may be recessed or protrude to form the door handle 75.

As another example, the frame guide 170 may be coupled to the door handle 75. The frame guide 170 is only involved in the assembly of the rear frame 80 and the front frame 70 and is not coupled to the door handle 75.

Although the preferred embodiments of the present disclosure have been described for illustrative purposes, those skilled in the art will appreciate that various modifications, additions and substitutions are possible, without departing from the scope and spirit of the present disclosure as disclosed in the accompanying claims. Therefore, the preferred embodiments described above have been described for illustrative purposes, and should not be intended to limit the technical spirit of the present disclosure, and the scope and spirit of the present disclosure are not limited to the embodiments. The protective scope of the present disclosure should be interpreted by the accompanying claims, and all technical spirits within the equivalent scope should be interpreted as being included in the scope and spirit of the present disclosure.

## Claims

1. A door for a home appliance, the door comprising:
a door body (70, 80, 90) disposed in front of a storage space (41) of a home appliance;
a door panel (G) coupled to the door body (70, 80, 90) and having a window (V) on a central portion thereof;
an electronic component unit (100) disposed in the door panel (G) and operated by receiving power; and
a frame guide (170) coupled to the door body (70, 80, 90) and connected to the electronic component unit (100).

2. The door for a home appliance of claim 1, wherein a door handle (75) is disposed at a position opposite to the frame guide (170) with the door body (70, 80, 90) located between the door handle (75) and the frame guide (170), and
the frame guide (170) and the door handle (75) are fastened to each other by a fastener passing through the door body (70, 80, 90).

3. The door for a home appliance of claim 1 or 2, wherein the frame guide (170) is disposed between an edge of the door body (70, 80, 90) and the window (V).

4. The door for a home appliance of any one of claims 1 to 3, wherein the door body (70, 80, 90) comprises:
a front frame (70); and
a rear frame (80) coupled to the front frame (70) with the door panel (G) located between the front frame (70) and the rear frame (80),
wherein the frame guide (170) is disposed between the front frame (70) and the rear frame (80).

5. The door for a home appliance of claim 4, wherein a door handle (75) is disposed at a position opposite to the frame guide (170) with the front frame (70) located between the door handle (75) and the frame guide (170),
the rear frame (80), the frame guide (170), the front frame (70), and the door handle (75) have respective fastening holes (77b, 87, 174a, FH2) that are connected to each other, and
a fastener (B2) passing through the fastening holes (77b, 87, 174a, FH2) fastens the rear frame (80), the frame guide (170), the front frame (70), and the door handle (75) to each other.

6. The door for a home appliance of any one of claims 1 to 5, wherein the door panel (G) comprises:
the window (V) formed at a central portion of the door panel (G); and
a panel edge unit (PA) formed around the window (V),
wherein the electronic component unit (100) and the frame guide (170) are connected to each other at positions where the electronic component unit (100) and the frame guide (170) face the panel edge unit (PA).

7. The door for a home appliance of any one of claims 1 to 6, wherein the electronic component unit (100) and the frame guide (170) are coupled to each other in a direction where the door body (70, 80, 90) and the door panel (G) are stacked on each other.

8. The door for a home appliance of any one of claims 1 to 7, wherein the electronic component unit (100) comprises a connection arm (150) protruding toward an edge of the door body (70, 80, 90), and the connection arm (150) is connected to the frame guide (170).

9. The door for a home appliance of claim 8, wherein the connection arm (150) comprises:
a bridge part (151) connected to a casing (110) of the electronic component unit (100); and
a coupling part (155) connected to the bridge part (151) and coupled to the frame guide (170).

10. The door for a home appliance of claim 8 or 9, wherein based on a direction where the connection arm (150) is coupled to the frame guide (170), the coupling part (155) has a thickness thinner than a bridge part (151).

11. The door for a home appliance of any one of claims 8 to 10, wherein the coupling part (155) is coupled to a support body (175) of the frame guide (170), and
the coupling part (155) is disposed closer to a surface of the front panel (Ga) than the support body (175).

12. The door for a home appliance of any one of claims 8 to 11, wherein the coupling part (155) is coupled to a support body (175) of the frame guide (170),
the support body (175) is disposed closer to a surface of the front panel (Ga) than the coupling part (155), and
the support body (175) comprises a support protrusion (177) protruding toward a surface of the front panel (Ga) and passing through a connection hole (156) of the coupling part (155).

13. The door for a home appliance of any one of claims 1 to 12, wherein an installation region (IA) is formed in a surface of the door body (70, 80, 90) that is outside an edge of the door panel (G), and
a part of the frame guide (170) is fixed to the installation region (IA).

14. The door for a home appliance of any one of claims 1 to 13, wherein a part of the frame guide (170) is fixed to the door body (70, 80, 90), and a remaining part of the frame guide (170) is disposed at a position facing a surface of the door panel (G).

15. The door for a home appliance of any one of claims 1 to 14, wherein the frame guide (170) comprises:
a fixed body (171) fixed to the door body (70, 80, 90); and
a support body (175) connected to the fixed body (171) and connected to the electronic component unit (100).
